(19) Europäisches Patentamt
European Patent Office
Office européen des brevets

(11) EP 1 947 609 A1

(12) EUROPEAN PATENT APPLICATION

(43) Date of publication:
23.07.2008 Bulletin 2008/30

(51) Int Cl.:
*G06T 9/00* (2006.01)

(21) Application number: 07300735.3

(22) Date of filing: 18.01.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: Thomson Licensing
92100 Boulogne-Billancourt (FR)

(72) Inventors:
• Gao, Yong Ying
Chaoyang District
100101 Beijing (CN)

• Wu, Yu Wen
Xuanwu District
100031 Beijing (CN)
• Lee, Bongsun
La Crescenta, CA 91214 (US)
• Doser, Ingo
Burbank, CA 91504 (US)

(74) Representative: Ruellan-Lemonnier, Brigitte
Thomson
46, quai A. Le Gallo
92648 Boulogne Cedex (FR)

(54) **Method to map the differences between two images**

(57) Method comprising the following steps :
- expressing both images in a device independent opponent color space, having separated luminance and chrominance components,
- using a non-linear function to transform luminance component of both images into a so-called "perceived brightness" component,
- spatial filtering both images,
- visual masking at least the spatial filtered first image,
- calculating the pixel-to-pixel distances between the obtained two images, then mapping these distances.

Such a method is particularly well suited to differentiate high bit depth images.

Fig.1

**Description**

The present invention relates to the field of computer vision and digital image processing. It provides an approach for measuring the visual difference for high bit depth images, which can be used in the visual quality assessment in high bit depth image/video coding.

In image/video coding, the Peak Signal-to-Noise Ratio (PSNR) is commonly used to measure the difference between an original image and a reproduced image and hence is the metric for reproduction quality. However, the PSNR value is not consistent with the differences that are actually perceived by the human eyes. However, how to model the human visual differences between the original image and its reproduction in a way that is close to the perception of the so-called "human visual system" (HVS) has been a hot but challenging task in the field of computer vision. The well-known and widely used approaches for visual difference metric include using CIE94, s-CIELab color space, and the so-called "Visual Difference Predictor" (VDP). The PhD thesis entitled "Measuring Images : Difference, Quality and Appearance", from Garett M. Johnson, 2003, Rochester Institute of Technology, discloses methods to map differences between images (see diagram p.40). See also the article entitled "Vision-based Strategy to reduce the perceived Color Misregistration to Image-Capturing devices", from Xia-Fan FENG and Scott DALY, in Proceedings of the IEEE, Vol. 90, No. 1, January 2002. See also the article entitled "Color Image Fidelity Metrics Evaluated Using Image Distortion Maps", from Xuemei ZHANG and Brian A. WANDELL (Preprint submitted to Elsevier Preprint - 23 July 1998). Untill now, there is still no actual standard visual difference metric that takes place of the conventional PSNR; see on Internet paragraph 4.4 of the article entitled "Enhanced Error Diffusion with Thresholds Modulated by Spatio-Chromatically Correlated Noise", from Jon M. SPEIGLE and Xiao-Fan FENG (date of publication not found).

The task to model and evaluate the visual differences between images becomes more challenging when the color bit depth is beyond 8-bit. One major reason is that the enhanced dynamic range in the high bit depth (which means higher bit depth than 8-bit depth in the remaining part of this document) images/videos may have different statistic characteristics from 8-bit depth.

This invention as disclosed hereafter presents a visual difference model that is based on human visual perception and is advantageously tuned to the dynamic range characteristics of high bit depth images. If we assume there are two images to differentiate, one is the original image and the other one is a reproduced versions of this original image, the problem is how to measure the visual difference between the two images. Then, the ultimate goal would be to generate a visual difference map that is to some degree compliant to human visual perception. The invention as disclosed hereafter presents an approach for modeling the visual differences between two images in a way that is close to the human visual perception. In particular, the visual difference model is advantageously designed to catch the dynamic range characteristics of high bit depth images.

Consequently, an object of the invention is a method to map the differences between a first image and a second image comprising the following steps :

- expressing both images in a device independent opponent color space, having separated luminance and chrominance components,
- using a non-linear function, again for both images, to transform at least the luminance component of both images expressed in said opponent color space, into a so-called "perceived brightness" component,
- spatial filtering both images that are expressed in said opponent color space using said "perceived brightness" component and chrominance component,
- visual masking at least the spatial filtered first image, in a manner adapted to compensate for the suppression of the high frequency components that result from previous spatial filtering,
- calculating the pixel-to-pixel distances between the obtained first image and the obtained second image, then mapping these distances.

Preferably, said device independent opponent color space is the $O_1 O_2 O_3$ color space, in which $O_1$ represents the luminance component, $O_2$ the red-green channel and $O_3$ the blue-yellow channel.

Use of opponent color space is known to be motivated by retinal processing : see the article entitled : "opponent color space motivated by retinal processing", by Silvio BORER and Sabine Süsstrunk, in Proceedings of IS&T Conference on Color in Graphics, Imaging and Vision (CGIV), vol. 1 (2002), p. 187-189 ; in this article, a non-linear transformation is performed on all the components of the device independent color space (as LMS) before conversion to a opponent color space.

An example of a very well known transformation from a RGB color space into an opponent color space is as follows :

$$O_1 = \frac{(R-G)}{\sqrt{2}} \;\; ; O_2 = \frac{(R+G-2B)}{\sqrt{6}} \;\; ; \;\; O_3 = \frac{(R+G+B)}{\sqrt{3}} \; .$$

Preferably, said spatial filtering is performed in frequency domain by multiplying the discrete Fourier transformation of the "perceived brightness"/chrominance component by the frequency domain representation of the contrast sensitivity function of the "perceived brightness"/chrominance component.

Preferably, before said pixel-to-pixel distance calculation, but after filtering step, both images are converted in a perceptually uniform color space, as, for instance, the conventional Lab color space ; as pixel-to-pixel distances are then calculated in this perceptually uniform color space, scaling between the distance of each channel (i.e. component) of the color space may be advantageously avoided.

Preferably, said first image is an original image, and said second image is a reproduction of said original image.

Preferably, the bit depth for digitally coding said first image and said second image is superior to 8. As a matter of fact, observations have shown that the method according to the invention is especially well adapted for images with such high bit depth.

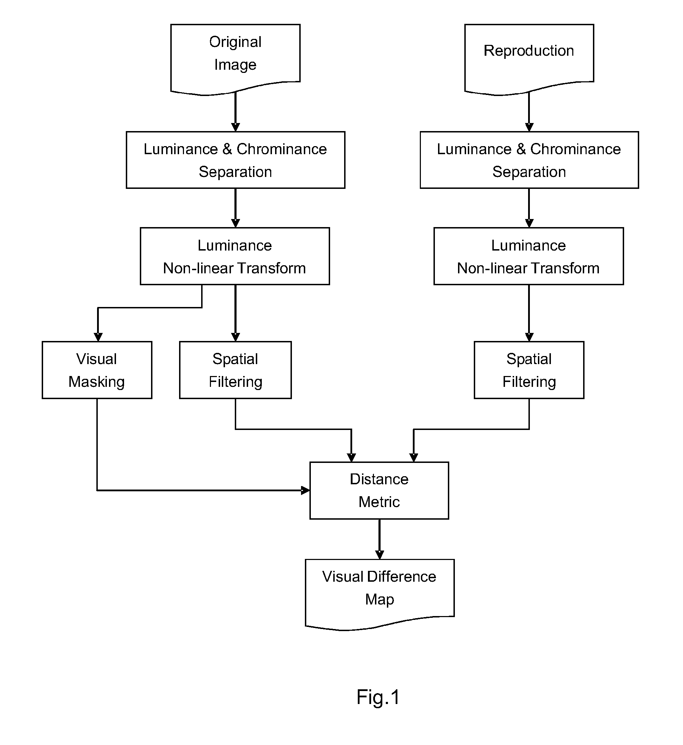

The invention will be more clearly understood on reading the description which follows, given by way of non-limiting example and with reference to the figure 1 which shows a diagram of the method according to one embodiment of the invention.

A flowchart of a visual difference model according to a preferred embodiment of the invention is shown in figure 1. In brief, an original image goes through the processes of luminance and chrominance separation, luminance non-linear transform, visual masking and spatial filtering. The reproduction to be compared to the orginal image, which is a reproduced version of the original image, goes through the processes of luminance and chrominance separation, luminance non-linear transform, and spatial filtering.

Then a certain distance metric is done pixel-by-pixel on the processed original image and its reproduction to generate the visual difference map between them. The visual difference map is of the same resolution of the original image but the value of each pixel represents the "degree of visual difference" between the original image and its reproduction. The following paragraphs 1 to 5 below describe in detail the five steps or modules shown in figure 1 ; within some paragraphs, specific examples are given.

1 - Luminance and Chrominance Separation in an opponent color space :

Because human visual system responds, spatially and temporally, differently to luminance and chrominance information, the first step of the method is to convert the original and reproduced input images from its color space (e.g., RGB or YCbCr) to a device independent color space, having separated luminance and chrominance dimensions. Based the fact that the perceived image depends on not only the image data but also the display device that is used, the parameters of the display primaries need to be considered in this step. Generally, the data of the input images are conventional linear RGB data, and, as exemplified below, the data that are outputted after a first conversion are for instance conventional LMS or XYZ data. Then, a second conversion is performed to express both images in a device independent opponent color space, still having separated luminance and chrominance dimensions.

Two different examples of luminance and chrominance separation are shown below :

*Example 1 of luminance and chrominance separation in an opponent color space:*

The RGB data representing the images (original and reproduced) are first converted in the LMS color space in terms of the chromaticity coordinates of the R, G, B phosphors of a certain CRT monitor and Smith-Pokorny cone sensitivity functions:

$$\begin{bmatrix} L \\ M \\ S \end{bmatrix} = \begin{bmatrix} 0.038252 & 0.068137 & 0.012246 \\ 0.013633 & 0.067091 & 0.016928 \\ 0.001903 & 0.006909 & 0.078388 \end{bmatrix} \begin{bmatrix} R \\ G \\ B \end{bmatrix} . \quad (1)$$

Secondly, the LMS color space is converted to an opponent color space:

$$\begin{bmatrix} O_1 \\ O_2 \\ O_3 \end{bmatrix} = \mathbf{M}_{lms-opp} \begin{bmatrix} L \\ M \\ S \end{bmatrix}. \qquad (2)$$

In practice, there are versatile matrices to convert from the LSM color space to an opponent color space, in which $O_1$ represents the luminance component, $O_2$ the red-green channel and $O_3$ the blue-yellow channel. The entrances of the conversion matrix $\mathbf{M}_{lms-opp}$ in equation (2) are not specified in this exemplary embodiment. Use of an opponent space is generally motivated by retinal processing ; CIELAB is generally considered as an example of opponent space ; other known opponent spaces are the Krauskopf system, the Faugeras system, and the Ballard system.

*Example 2 of Luminance and Chrominance Separation separation in an opponent color space :*

The RGB data representing the images (original and reproduced) are first converted in the XYZ color space :

$$\begin{bmatrix} X \\ Y \\ Z \end{bmatrix} = \begin{bmatrix} 0.480318 & 0.336554 & 0.240959 \\ 0.262587 & 0.616154 & 0.121259 \\ 0.028459 & 0.103520 & 1.204599 \end{bmatrix} \begin{bmatrix} R \\ G \\ B \end{bmatrix}, \qquad (3)$$

where the X, Y, and Z values were calculated for each phosphor of the considered CRT monitor and were combined as the conversion matrix in equation (3).

Secondly, the XYZ color space is converted to an opponent color space:

$$\begin{bmatrix} O_1 \\ O_2 \\ O_3 \end{bmatrix} = \mathbf{M}_{xyz-opp} \begin{bmatrix} X \\ Y \\ Z \end{bmatrix}. \qquad (4)$$

Similar to the first example above, the entrances of the conversion matrix $\mathbf{M}_{xyz-opp}$ in (4) are not specified here.

2 - Luminance Non-linear Transform :

It is well-known that there exists non-linear relationship between the physical luminance and the human perceived brightness. The proposed mathematical expression of this relationship includes logarithmic (known as Weber-Fechner law), exponential, square root, cube root, polynomial, etc.

A practically useful preferred embodiment is to utilize a sigmoid function, which is widely used in tone mapping techniques, to transform the luminance component $O_1$ that is obtained from step 1 above into a so-called "perceived brightness" component $O'_1$ as follows :

$$O_1' = \frac{1}{1 + \exp(-\alpha * (O_1 - 0.5))}, \qquad (5)$$

where the parameter a is empirically chosen as equal to 10. The value of $O_1$ is preferably normalized to be within the range [0, 1] before the sigmoid transformation and the resulted $O_1'$ is preferably mapped back to the original $O_1$ range. The transformed luminance component $O'_1$ that is obtained is then regarded as the representation of "perceived brightness".

3 - Spatial Filtering :

We depict the spatial filtering step before the visual masking step since the visual masking process is designed here to compensate some undesirable consequences of the spatial filtering. In general, the spatial filtering process is widely employed in "simulating human visual perception", because contrast sensitivity function (CSF) for the luminance component in opponent color space serves as a band pass filter while the CSF for the chrominance component in opponent color space works as a low pass filter. Hence, the spatial filtering shall be contained here in the visual difference model. Note that a spatial filtering is also used to build the famous s-CIELAB color space.

Here, the spatial filtering step is performed in frequency domain by multiplying the discrete Fourier transformation of the "perceived brightness"/chrominance component by the frequency domain representation of the CSF of the "perceived brightness"/chrominance component.

Without departing from the invention, the spatial filtering step can also be performed in the spatial domain by carefully selecting the filters according to the CSFs.

4 - Visual Masking :

An undesirable consequence of the spatial filtering is that the high frequency components are suppressed in filtering both the luminance and chrominance channels. However, human eyes are sensitive to special high frequency components, e.g., edges in an image. Hence, to compensate the undesirable high frequency suppression through the spatial filtering, a visual masking step is applied only to the original image, before the spatial filtering step.

As an example, the visual masking step can be realized by localizing edges through any state-of-the-art edge detection algorithms, such as Prewitt or Canny methods.

It should be remarked that the edge detection is only one of the desirable steps in visual masking module. Other steps that were designed to match the characteristics of human visual perception can also be included in the visual masking step.

One or several visual masks are generated in the visual masking step to indicate where the masking effects are located. The visual masks can be as simple as binary images to indicate whether each pixel shall be masked or not, or they can be represented as grey-level images with the value of each pixel indicating the weight of the masking effect.

5 & 6 - Distance Metric and Visual Difference Map:

Once both the original image and its reproduction have gone through the previous four steps as represented on figure 1, the pixel-by-pixel distance is calculated on the two processed images to generate the final visual difference map. The visual masks can serve as weights in calculating the distance. The distance metric can be based on norm-1 or norm-2 measurement. Two specific examples are shown below.

*Example 1 of Distance Metric:*

We assume that the processed image of the original image is denoted by $\{_{org}\tilde{O}_1(x,y),\ _{org}\tilde{O}_2(x,y),\ _{org}\tilde{O}_3(x,y)\}$, and the processed image of the reproduced image is denoted by $\{_{rep}\tilde{O}_1(x,y),\ _{rep}\tilde{O}_2(x,y),\ _{rep}\tilde{O}_3(x,y)\}$, where $x \in [0,...,W\text{-}1]$ representing the horizontal coordinate of each pixel and $y \in [0,\cdots,H\text{-}1]$ representing the vertical coordinate of the same pixel. We assume that the visual mask of the processed original image is denoted as *Mask(x, y)* to indicate the weight of the masking effect. The visual masks should be normalized so that all the weights are summed up to one. The visual difference map between input images is then calculated as:

$$vdM(x,y) = Mask(x,y) * (a_1 * \left|_{org}\tilde{O}_1(x,y) - _{rep}\tilde{O}_1(x,y)\right|$$
$$+ a_2 * \left|_{org}\tilde{O}_2(x,y) - _{rep}\tilde{O}_2(x,y)\right|, \quad (6)$$
$$+ a_3 * \left|_{org}\tilde{O}_3(x,y) - _{rep}\tilde{O}_3(x,y)\right|)$$

where $a_1$, $a_2$ and $a_3$ are coefficients to scale the distance off each channel and can be determined empirically.

*Example 2 of Distance Metric :*

The previous example requires to determine the coefficients $a_1$, $a_2$ and $a_3$ for scaling between the distance of each channel. This problem can be bypassed by converting from the opponent color space to the CIELab color space for both processed images, denoted by $\{_{org}\widetilde{L}*(x,y), _{org}\widetilde{a}*(x,y), _{org}\widetilde{b}*(x,y)\}$ and $\{_{rep}\widetilde{L}*(x,y), _{rep}\widetilde{a}*(x,y), _{rep}\widetilde{b}*(x,y)\}$, respectively. Then, the formula that is used to calculate the visual difference is shown below

$$vdM(x,y) = Mask(x,y)*sqrt\{(_{org}\widetilde{L}*(x,y)-_{rep}\widetilde{L}*(x,y))^2$$
$$+(_{org}\widetilde{a}*(x,y)-_{rep}\widetilde{a}*(x,y))^2 \qquad . \quad (6)$$
$$+(_{org}\widetilde{b}*(x,y)-_{rep}\widetilde{b}*(x,y))^2\}$$

The matrices that convert from the opponent color space to CIE Lab color space are not specified.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method to map the differences between a first image and a second image comprising the following steps :

   - expressing both images in a device independent opponent color space, having separated luminance and chrominance components,
   - using a non-linear function, again for both images, to transform at least the luminance component of both images expressed in said opponent color space, into a so-called "perceived brightness" component,
   - spatial filtering both images that are expressed in said opponent color space using said "perceived brightness" component and chrominance component,
   - visual masking at least the spatial filtered first image, in a manner adapted to compensate for the suppression of the high frequency components that result from previous spatial filtering,
   - calculating the pixel-to-pixel distances between the obtained first image and the obtained second image, then mapping these distances.

2. Method according to claim 1 **characterized in that** said device independent opponent color space is $O_1O_2O_3$ color space, in which $O_1$ represents the luminance component, $O_2$ the red-green channel and $O_3$ the blue-yellow channel.

3. Method according to any one of the preceding claims **characterized in that** said spatial filtering is performed in frequency domain by multiplying the discrete Fourier transformation of the "perceived brightness"/chrominance component by the frequency domain representation of the contrast sensitivity function of the "perceived brightness"/chrominance component.

4. Method according to any one of the preceding claims **characterized in that**, before said pixel-to-pixel distance calculation, but after filtering step, both images are converted in a perceptually uniform color space.

5. Method according to any one of the preceding claims **characterized in that** said first image is an original image, and said second image is a reproduction of said original image.

6. Method according to any one of the preceding claims **characterized in that** the bit depth for digitally coding said first image and said second image is superior to 8.

Fig.1

European Patent
Office

**EUROPEAN SEARCH REPORT**

Application Number

EP 07 30 0735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANTIUK, RAFAL; DALY, SCOTT J.; MYSZKOWSKI, KAROL ; SEIDEL, HANS-PETER: "Predicting Visible Differences in High Dynamic Range Images - Model and its Calibration" HUMAN VISION AND ELECTRONIC IMAGING X, IS&T/SPIE'S 17TH ANNUAL SYMPOSIUM ON ELECTRONIC IMAGING (2005), 16 January 2005 (2005-01-16), pages 204-214, XP002444666 * abstract; figure 1 * ----- | 1-6 | INV. G06T9/00 |
| X | LONGHURST P ET AL: "User validation of image quality assessment algorithms" THEORY AND PRACTICE OF COMPUTER GRAPHICS, 2004. PROCEEDINGS BOURNEMOUTH, UK JUNE 8-10, 2004, PISCATAWAY, NJ, USA,IEEE, 8 June 2004 (2004-06-08), pages 196-202, XP010709038 ISBN: 0-7695-2137-1 section 3 ----- | 1-6 | |
| X | GARRETT M. JOHNSON: "Measuring Images: Differences, Quality and Appearance" March 2003 (2003-03), ROCHESTER INSTUTE OF TECHNOLOGY , XP002444668 sections 1.2, 3.1, 3.2, 4.1, 4.2 ----- | 1-6 | TECHNICAL FIELDS SEARCHED (IPC) G06T |

The present search report has been drawn up for all claims

| Place of search | Date of completion of the search | Examiner |
|---|---|---|
| Berlin | 27 July 2007 | Kulak, Eray |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GARETT M. JOHNSON.** *Measuring Images : Difference, Quality and Appearance,* 2003
- **XIA-FAN FENG ; SCOTT DALY.** Vision-based Strategy to reduce the perceived Color Misregistration to Image-Capturing devices. *Proceedings of the IEEE,* January 2002, vol. 90 (1
- **XUEMEI ZHANG ; BRIAN A. WANDELL.** Color Image Fidelity Metrics Evaluated Using Image Distortion Maps. *Preprint submitted to Elsevier Preprint,* 23 July 1998
- **SILVIO BORER ; SABINE SÜSSTRUNK.** opponent color space motivated by retinal processing. *Proceedings of IS&T Conference on Color in Graphics, Imaging and Vision (CGIV,* 2002, vol. 1, 187-189